Europäisches Patentamt

European Patent Office

Office européen des brevets

(19)

(11) Numéro de publication: **0 139 586**
**B1**

(12) # FASCICULE DE BREVET EUROPEEN

(45) Date de publication du fascicule du brevet:
31.01.90

(51) Int. Cl.⁴: **G 05 D 23/19**

(21) Numéro de dépôt: 84402039.6

(22) Date de dépôt: 10.10.84

(54) Dispositif de commande thermique.

| | |
|---|---|
| Demande divisionnaire 88103053 déposée le 01.03.88. | (73) Titulaire: **DAUPHINOISE THOMSON Société anonyme dite:, 40, rue Marcel Peretto, F-3100 Grenoble (FR)** |
| (30) Priorité: **11.10.83 FR 8316159** | (72) Inventeur: **Nouvelle, Robert, Malhivert, F-38640 Claix (FR)** Inventeur: **Segura, Jean-Louis, 2, Avenue John Kennedy, F-38500 Voiron (FR)** |
| (43) Date de publication de la demande: **02.05.85 Bulletin 85/18** | |
| (45) Mention de la délivrance du brevet: **31.01.90 Bulletin 90/5** | (74) Mandataire: **Casalonga, Axel et al, BUREAU D.A. CASALONGA - JOSSE Morassistrasse 8, D-8000 München 5 (DE)** |
| (84) Etats contractants désignés: **DE FR GB IT SE** | |
| (56) Documents cités: **FR-A- 2 179 952 FR-A- 2 456 838 GB-A- 1 146 122 GB-A- 2 114 292 US-A- 2 777 662 US-A- 3 029 595 US-A- 3 263 411 US-A- 3 442 078** | |

ACTORUM AG

## Description

La présente invention concerne un dispositif de commande thermique du type comprenant une capsule creuse ménageant une chambre, dont l'une des parois d'extrémité est traversée par un piston et qui est remplie par un produit dilatable dont le volume varie avec la température de manière à transformer la variation de volume du produit en un déplacement axial dudit piston ainsi qu'un moyen thermique en contact thermique avec ledit produit de manière à faire varier sa température en vue de déplacer axialement ledit piston ou de contrôler son déplacement par rapport à ladite capsule.

Des dispositifs de commande thermique de ce genre sont actuellement utilisés notamment dans le domaine de l'automobile. Le moyen thermique est formé par un fluide circulant à l'extérieur de la capsule, le piston servant à réguler un clapet en fonction de la température du fluide. On connaît également par le brevet FR-A-2 456 838 un dispositif de commande thermique disposé dans le fluide circulant dans une conduite dans lequel le corps du dispositif est mobile tandis que le piston est fixe. Dans ce dispositif connu, on a prévu également une ampoule cylindrique dans la chambre remplie du produit dilatable qui est fixée au piston et qui renferme une résistance électrique alimentée au travers du piston, du canal d'écoulement du fluide et de sa paroi.

On connaît également par le brevet US-A-3 029 595 un dispositif de commande thermique dans le corps duquel s'étend une résistance filaire dont l'une des extrémités est connectée à un manchon vissée dans l'extrémité de ce corps et dont l'autre extrémité est reliée à une connexion électrique qui s'étend au travers d'un bloc isolant monté dans ce manchon. Ce dispositif nécessite beaucoup de pièces pour assurer d'une part l'étanchéité et d'autre part les connexions électriques de la résistance électrique.

La présente invention a pour but de remédier aux inconvénients de l'état de la technique et d'augmenter les possibilités d'utilisation des dispositifs de commande thermique du type précité, d'améliorer considérablement le contrôle et/ou la variation de la vitesse du volume du produit dilatable contenu dans la capsule de manière simple afin de diminuer les temps de réponse et de proposer des structures de liaisons simples à fabriquer permettant cependant de résister aux pressions internes du produit dilatable très élevées.

Le dispositif de commande thermique, objet de la présente invention, comprend une capsule creuse ménageant une chambre, dont l'une des parois d'extrémité est traversée par un piston et qui est remplie par un produit dilatable dont le volume varie avec la température de manière à transformer la variation de volume du produit dilatable en un déplacement axial dudit piston ainsi qu'un moyen thermique comprenant au moins une résistance électrique s'étendant dans ledit produit de manière à faire varier sa température et provoquer le déplacement axial dudit piston ou de contrôler son déplacement par rapport à ladite capsule, ladite résistance électrique étant portée par la paroi formant fond de ladite capsule opposée à sa paroi traversée par ledit piston et étant alimentée en énergie électrique au travers de cette paroi formant fond.

Conformément à la présente invention telle que revendiquée, ladite résistance électrique est une résistance filaire blindée comprenant une enveloppe entourant un fil électrique, cette enveloppe étant isolée électriquement de ce fil électrique et conductrice de la chaleur, les extrémités de son enveloppe étant soudées de façon étanche à la paroi formant fond de ladite capsule et les extrémités de son fil électrique étant connectables électriquement, à l'extérieur de ladite capsule.

Dans une variante de réalisation, le corps de ladite capsule et ladite paroi formant fond de cette capsule sont en une seule pièce.

Dans une autre variante, ladite paroi formant fond de ladite capsule est formée par une pièce séparée sur laquelle est montée ladite résistance électrique et qui est ultérieurement assemblée de façon étanche au corps de la capsule. Ladite pièce peut être soudée ou peut être montée par sertissage sur le corps de ladite capsule.

Selon l'invention, la paroi intérieure de ladite capsule peut avantageusement être, au moins en partie, recouverte d'un matériau isolant thermique.

La présente invention sera mieux comprise à l'étude de dispositifs de commande thermique décrits à titre d'exemples non limitatifs et illustrés par le dessin sur lequel:

– la figure 1 représente en coupe axiale un dispositif de commande thermique comprenant des parties conformes à la présente invention;

– et la figure 2 représente en coupe axiale un dispositif de commande thermique selon la présente invention;

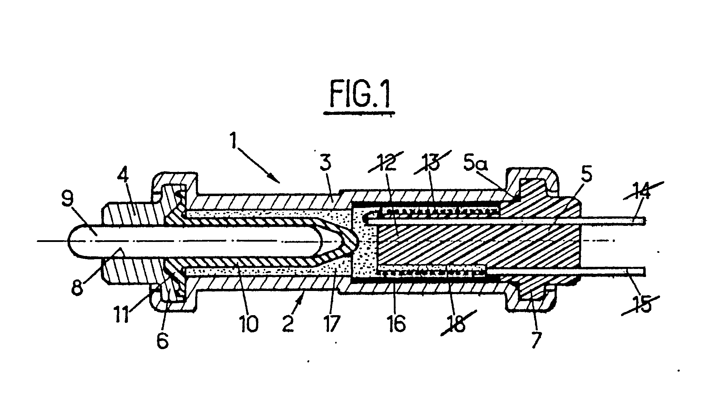

En se reportant à la figure 1, on voit que le dispositif de commande thermique repéré d'une manière générale par la référence 1 comprend une capsule creuse 2 qui est formée par un corps 3 dont la paroi est cylindrique et dont l'une des extrémités est bouchée par une bague 4 et l'autre extrémité est bouchée par une paroi formant fond constituée par un bloc 5, la bague 4 et le bloc 5 présentant respectivement des épaulements annulaires 6 et 7 qui sont sertis sur les extrémités correspondantes du corps cylindrique 3, un joint d'étanchéité annulaire 5a étant prévu entre le bloc 5 et le corps 3.

La bague d'extrémité 4 présente un passage axial 8 au travers duquel s'étend axialement un piston ou tige de commande 9 et dans lequel ce piston 9 est susceptible d'être guidé lors de ses déplacements axiaux. L'extrémité du piston 9 qui s'étend à l'intérieur de la capsule 2 est enveloppé par une membrane souple 10 qui présente une lèvre annulaire 11 en contact avec l'épaulement 6 de la bague 4 et sertie sur l'extrémité correspondante du corps 3 en même temps que cet épaulement 6.

Le volume intérieur libre de la capsule 12 est rempli d'un produit 17 dont le volume varie en fonction de la température, ce produit 17 étant en général constitué par de la cire.

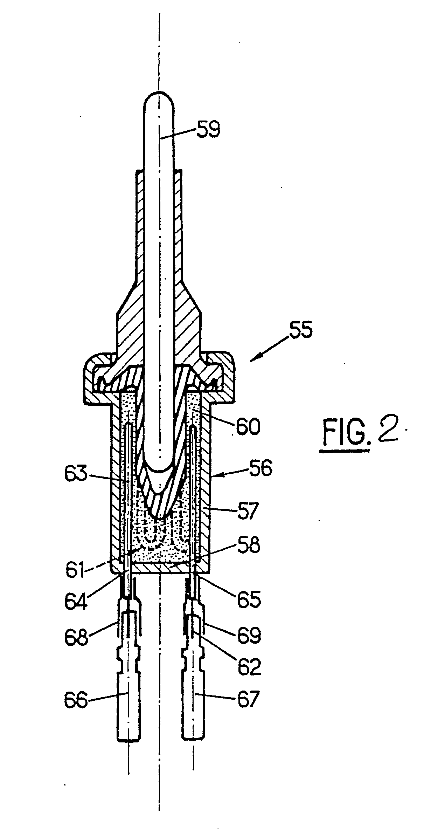

Dans le dispositif de régulation thermostatique représenté sur la figure 2 et repéré d'une manière générale par la référence 55, la capsule creuse 56 comprend un corps cylindrique 57 et une paroi formant fond 58, opposée au piston 59, qui sont en une seule pièce, le piston 59 étant monté sur l'autre extrémité du corps 57 de la capsule 56 de la même manière que précédemment.

Dans la chambre intérieure 60 de la capsule 56 qui est remplie, comme précédemment, par un produit dilatable s'étend une résistance électrique blindée filaire 61 qui présente des spires axiales formant un cylindre. Cette résistance électrique filaire blindée comprend un fil électrique intérieur conducteur 62 entouré par une enveloppe 63 par exemple en acier inoxydable, le fil électrique 62 et l'enveloppe 63 étant isolés électriquement. Les extrémités 64 et 65 de cette résistance blindée filaire 63 traversent la paroi formant fond 58 de la capsule creuse 56, l'enveloppe 63 de ces extrémités 64 et 65 étant soudées de façon étanche, par l'extérieur, sur la paroi formant fond 58 tandis que des connexions électriques 66 et 67 sont reliées électriquement aux extrémités du fil électrique 62 et sont portées par les extrémités de l'enveloppe 63 extérieures à la capsule 56 par l'intermédiaire de bagues isolantes 68 et 69. Cette fois également, la résistance électrique filaire 61 est portée par la paroi formant fond 58 et est suspendue dans le produit dilatable 60.

Le dispositif de commande thermique 55 représenté sur la figure 2 fonctionne de la manière suivante.

Par l'intermédiaire des connexions électriques 14 et 15 qui s'étendent à l'extérieur de la capsule 55, il est possible d'alimenter en énergie électrique le fil électrique 62 de la résistance blindée 61. Ce faisant, cette résistance électrique chauffe le produit contenu dans la chambre 60 qui en conséquence se dilate et cette variation de volume provoque un déplacement du piston 59 vers l'extérieur. En contrôlant l'énergie électrique d'alimentation de la résistance électrique 61, il est possible de contrôler le taux de variation de volume dudit produit et en conséquence le déplacement et la vitesse de déplacement du piston 59.

On va maintenant décrire comment il est possible de monter de manière simple la résistance électrique du dispositif de commande statique décrit en référence à la figure 2.

On forme une résistance électrique filaire blindée dans la configuration indiquée, on perce deux trous au travers de la paroi formant fond de la capsule, on dispose la résistance ainsi formée dans le corps de la capsule par son extrémité devant recevoir ultérieurement le piston de telle sorte que ses extrémités traversent lesdits trous, on soude les extrémités de l'enveloppe de la résistance électrique filaire blindée sur cette paroi formant fond et on monte les connexions électriques appropriées sur les extrémités du fil électrique intérieur de cette résistance blindée et le montage de la résistance électrique blindée filaire est terminé.

En se reportant à nouveau à la figure 1, on voit que la paroi intérieure du corps 3 est recouverte d'un matériau thermiquement isolant. Cette couche de matériau isolant peut être également prévue dans le corps 57 de l'exemple de la figure 2, en regard de la résistance 61.

Il ressort de l'exemple qui précède que le dispositif de commande thermique selon la présente invention est de structure simple et facile à monter et donc présente des coûts de fabrication relativement faibles, qu'il assure une très bonne dispersion de la chaleur vers le produit dilatable et donc ne nécessite pas des puissances électriques de commande élevées et que les moyens pour effectuer les liaisons électriques sont simples et fiables. De plus, du fait que les liaisons électriques à une source d'énergie sont prévues extérieurement à sa paroi formant fond opposée à son piston, son montage sur une conduite de fluide, afin d'utiliser son piston comme organe de commande, est particulièrement simple et fiable.

La présente invention ne se limite pas cependant à l'exemple ci-dessus décrit. Elle peut en effet présenter de nombreuses variantes de réalisation et d'application. Par exemple, le dispositif de commande thermique selon la présente invention peut être utilisé pour réguler rapidement la position de leviers de commande, de soupapes et autres organes à commander en fonction de paramètres extérieurs à partir desquels l'action du moyen thermique sur le produit dilatable est réglé par régulation d'une source d'énergie électrique.

**Revendications**

1. Dispositif de commande thermique comprenant une capsule creuse ménageant une chambre, dont l'une des parois d'extrémité est traversée par un piston et qui est remplie par un produit dilatable dont le volume varie avec la température de manière à transformer la variation de volume du produit dilatable en un déplacement axial dudit piston ainsi qu'un moyen thermique comprenant au moins une résistance électrique s'étendant dans ledit produit de manière à faire varier sa température et provoquer le déplacement axial dudit piston ou de contrôler son déplacement par rapport à ladite capsule, ladite résistance électrique (61) étant portée par la paroi formant fond (5, 21, 46, 58, 73) de ladite capsule opposée à sa paroi traversée par ledit piston et étant alimentée en énergie électrique au travers de cette paroi formant fond, caractérisé par le fait que ladite résistance électrique est une résistance filaire blindée (61) comprenant une enveloppe (63) entourant un fil électrique (62), cette enveloppe étant isolée électriquement de ce fil électrique et conductrice de la chaleur, les extrémités de son enveloppe (63) étant soudées de façon étanche à la paroi formant fond de ladite capsule et les extrémités de son fil électrique (62) étant connectables électriquement, à l'extérieur de ladite capsule.

2. Dispositif de commande thermique selon la revendication 1, caractérisé par le fait que le corps de ladite capsule et ladite paroi formant fond (58) de cette capsule sont en une seule pièce.

3. Dispositif de commande thermique selon la revendication 1, caractérisé par le fait que ladite paroi formant fond de ladite capsule est formée par une pièce séparée (5, 21, 46, 73) sur laquelle est montée ladite résistance électrique (61) et qui est ultérieurement assemblée de façon étanche au corps de la capsule.

4. Dispositif de commande thermique selon la revendication 3, caractérisé par le fait que ladite pièce (73) est soudée sur le corps de ladite capsule.

5. Dispositif de commande thermique selon la revendication 3, caractérisé par le fait que ladite pièce (5, 21, 46) est montée par sertissage sur le corps de ladite capsule.

6. Dispositif de commande thermique selon l'une quelconque des revendications précédentes, caractérisé par le fait que la paroi intérieure de ladite capsule est, au moins en partie, recouverte d'un matériau isolant thermique (16).

## Claims

1. Thermal regulation device comprising a hollow capsule providing a chamber, through one of the end walls of which a piston travels, and which is filled with a dilatable product, the volume of which varies with the temperature in such a way that the variation in volume of the dilatable product is changed into an axial displacement of the said piston, and a thermal means comprising at least one electrical resistor extending into the said product in such a way that its temperature is varied and that the axial displacement of the said piston is brought about, or its displacement in relation to the said capsule is controlled, the said electrical resistor (61) being carried by the wall forming the base (5, 21, 46, 58, 73) of the said capsule opposite the wall of this capsule through which the said piston travels, and being supplied with electrical energy through this wall forming the base, characterised in that the said electrical resistor is a sheathed wire resistor (61) comprising an envelope (63) surrounding an electrical wire (62), this envelope being electrically insulated from this electrical wire and heat-conducting, the ends of its envelope (63) being soldered in sealed manner to the wall forming the base of the said capsule and the ends of its electrical wire (62) being capable of electrical connection, outside the said capsule.

2. Thermal regulation device according to claim 1, characterised in that the body of the said capsule and the said wall forming the base (58) of this capsule are in a single piece.

3. Thermal regulation device according to claim 1, characterised in that the said wall forming the base of the said capsule is formed by a separate piece (5, 21, 46, 73) on which is mounted the said electrical resistor (61) and which is finally assembled in sealed manner to the body of the capsule.

4. Thermal regulation device according to claim 3, characterised in that the said piece (73) is soldered on to the body of the said capsule.

6. Thermal regulation device according to claim 3, characterised in that the said piece (5, 21, 46) is mounted by means of crimping on to the body of the said capsule.

6. Thermal regulation device according to one of the preceding claims, characterised in that the inner wall of the said capsule is, at least partly, covered with a thermal insulating material (16).

## Patentansprüche

1. Thermische Steuervorrichtung mit einer hohlen Kapsel, die eine Kammer ausbildet, deren eine Stirnwand von einem Kolben durchdrungen ist und die mit einem wärmedehnbaren Stoff ausgefüllt ist, dessen Volumen sich mit der Temperatur ändert, um die Änderung des Volumens des wärmedehnbaren Stoffes in eine axiale Verschiebung des Kolbens umzusetzen, so wie mit einem thermischen Mittel, das wenigstens einen elektrischen Widerstand umfaßt, der sich in dem Stoff erstreckt, um dessen Temperatur zu verändern und die axiale Verschiebung des Kolbens zu bewirken oder dessen Verschiebung im Verhältnis zur Kapsel zu steuern, wobei der elektrische Widerstand (61) von einer Wand, die einen der von dem Kolben durchdrungenen Wand gegenüberliegenden Boden (5, 21, 46, 58, 73) der Kapsel bildet, getragen und durch die den Boden bildende Wand hindurch mit elektrischer Energie versorgt ist, dadurch gekennzeichnet, daß der elektrische Widerstand ein armierter drahtförmiger Widerstand (61) ist, der eine einen elektrischen Draht (62) umgebende Umhüllung (63) aufweist, die elektrisch gegen den elektrischen Draht isoliert sowie wärmeleitend ist, wobei die Enden seiner Hülle (63) dichtend an die den Boden der Kapsel bildende Wand angeschweißt sind und die Enden seines elektrischen Drahtes (62) außerhalb der Kapsel elektrisch anschließbar sind.

2. Thermische Steuervorrichtung nach Anspruch 1, dadurch gekennzeichnet, daß der Körper der Kapsel und die den Boden (58) der Kapsel bildende Wand aus einem einzigen Stück bestehen.

3. Thermische Steuervorrichtung nach Anspruch 1, dadurch gekennzeichnet, daß die den Boden der Kapsel bildende Wand aus einem gesonderten Stück (5, 21, 46, 73) geformt ist, auf dem der elektrische Widerstand (61) montiert ist, und das nachträglich dichtend an den Körper der Kapsel angefügt ist.

4. Thermische Steuervorrichtung nach Anspruch 3, dadurch gekennzeichnet, daß besagtes Stück (73) an den Körper der Kapsel angeschweißt ist.

5. Thermische Steuervorrichtung nach Anspruch 3, dadurch gekennzeichnet, daß besagtes Stück (5, 21, 46) durch eine Bördelverbindung an dem Körper der Kapsel angebracht ist.

6. Thermische Steuervorrichtung nach einem der vorhergehenden Ansprüche, dadurch gekennzeichnet, daß die Innenwand der Kapsel wenigstens zum Teil von einem thermisch isolierenden Material (16) bedeckt ist.

# FIG.1

FIG. 2